# EUROPÄISCHE PATENTSCHRIFT

(11) **EP 4 165 455 B1**
(45) Veröffentlichungstag und Bekanntmachung des Hinweises auf die Patenterteilung: **01.10.2025**
(21) Anmeldenummer: 21762392.5
(22) Anmeldetag: 06.08.2021
(51) Int. Cl.: G02B 7/02, G02B 19/00

(54) **MIKROLINSENANORDNUNG UND MIKROOPTISCHE VORRICHTUNG**
MICROLENS ARRANGEMENT AND MICRO-OPTICAL DEVICE
AGENCEMENT DE MICROLENTILLES ET DISPOSITIF MICRO-OPTIQUE

(30) Priorität: 27.08.2020 DE 102020210845
(43) Veröffentlichungstag der Anmeldung: 19.04.2023
(73) Patentinhaber: HSP Hochspannungsgeräte GmbH, 53842 Troisdorf (DE)
(72) Erfinder: SCHUBERTH, Stefan, 96215 Lichtenfels-Schney (DE)
(74) Vertreter: Betten & Resch
(86) Internationale Anmeldenummer: PCT/EP2021/072080
(87) Internationale Veröffentlichungsnummer: WO 2022/043032

(56) Entgegenhaltungen:
- WO-A1-2006/001928
- DE-A1- 102012 213 043
- DE-A1- 4 029 559
- JP-A- H04 152 309

## Beschreibung

Die Erfindung betrifft eine Mikrolinsenanordnung und eine mikrooptische Vorrichtung mit einer Mikrolinsenanordnung, wobei die Mikrolinsenanordnung eine Mikrolinse und eine Linsenhalterung für die Mikrolinse umfasst, wobei die Linsenhalterung ein Halterungsrohr aufweist, das einen Rohrschlitz aufweist, und die Mikrolinse innerhalb des Halterungsrohres angeordnet ist, wobei die Linsenhalterung eine an einem Ende des Halterungsrohres angeordnete und die Linsenhalterung abschließende Bodenplatte aufweist, die eine Bodenplattenöffnung zu einem Rohrinneren des Halterungsrohres aufweist.

Eine Mikrolinse wird beispielsweise eingesetzt, um Licht einer Lichtquelle in einen Lichtwellenleiter einzukoppeln. Als Lichtquelle wird dabei beispielsweise eine Leuchtdiode eingesetzt. Mit der Mikrolinse wird das Licht der Lichtquelle gebündelt. Dies ist oft notwendig, wenn das von der Lichtquelle ausgegebene Licht relativ intensitätsarm ist und/oder sehr divergent, das heißt in einen großen Raumwinkel abgestrahlt wird, und deshalb gebündelt werden muss. Die Bündelung des Lichts mit der Mikrolinse ermöglicht in einem solchen Fall eine ausreichende Lichtintensität des in den Lichtwellenleiter eingekoppelten Lichts.

In der technischen Optik wird eine Mikrolinse beispielsweise direkt auf oder über einer lichtemittierenden Fläche einer Lichtquelle angeordnet, um von der Lichtquelle abgestrahltes Licht aus einem möglichst großen Raumwinkel einzufangen und in einen Lichtwellenleiter einzukoppeln. Eine derartige Mikrolinse kann beispielsweise einen Durchmesser von weniger als 0,3 mm aufweisen. Die Justierung der Mikrolinse über der Lichtquelle ist schulungs-, zeit- und personalintensiv, was die Herstellungskosten einer mikrooptischen Vorrichtung mit einer Lichtquelle und einer Mikrolinse stark erhöht.

Aus der WO 2006/001928 A1 ist eine Linsenhalterung bekannt, bei der eine Kugellinse in einem Rohr gehalten ist. Aus der JP H04 152309 A ist eine Linsenhalterung bekannt, bei der eine Stablinse in einem geschlitzten Rohr eingesetzt ist.

Der Erfindung liegt die Aufgabe zugrunde, die Justierung einer Mikrolinse zu erleichtern.

Die Aufgabe wird erfindungsgemäß durch eine Mikrolinsenanordnung mit den Merkmalen des Anspruchs 1, eine mikrooptische Vorrichtung mit den Merkmalen des Anspruchs 10 und ein Verfahren mit den Merkmalen des Anspruchs 14 gelöst.

Vorteilhafte Ausgestaltungen der Erfindung sind Gegenstand der Unteransprüche.

Eine erfindungsgemäße Mikrolinsenanordnung zeichnet sich dadurch aus, dass die Linsenhalterung eine an einem Ende des Halterungsrohres angeordnete und die Linsenhalterung abschließende Bodenplatte aufweist, die eine Bodenplattenöffnung zu einem Rohrinneren des Halterungsrohres aufweist.

Bei der erfindungsgemäßen Mikrolinsenanordnung ist eine Mikrolinse also in einem geschlitzten Halterungsrohr einer Linsenhalterung angeordnet. Die Mikrolinsenanordnung ermöglicht eine einfache Justierung der Mikrolinse über einer Lichtquelle durch Anordnung der Mikrolinse innerhalb des Halterungsrohres, das über der Lichtquelle angeordnet wird. Dabei kann der Rohrschlitz des Halterungsrohres vorteilhaft genutzt werden, um die Mikrolinse in das Halterungsrohr einzusetzen, einen Abstand der Mikrolinse zu der Lichtquelle zu justieren und die Mikrolinse an dem Halterungsrohr zu befestigen, beispielsweise durch Verkleben der Mikrolinse mit dem Halterungsrohr. Das Halterungsrohr kann außerdem auch dazu dienen, Licht der Lichtquelle zu der Mikrolinse zu lenken. Der Rohrschlitz in dem Halterungsrohr der Mikrolinsenanordnung kann ferner vorteilhaft zur Durchführung einer elektrischen Leitung, beispielsweise eines Bonddrahtes, zu der Lichtquelle genutzt werden.

Bei einer Ausgestaltung der erfindungsgemäßen Mikrolinsenanordnung verläuft der Rohrschlitz über eine gesamte Rohrlänge des Halterungsrohres. Dadurch kann die Mikrolinse vorteilhaft entlang der gesamten Rohrlänge des Halterungsrohres durch den Rohrschlitz positioniert und an dem Halterungsrohr befestigt werden.

Bei weiteren einer Ausgestaltung der erfindungsgemäßen Mikrolinsenanordnung weist die Mikrolinse einen Durchmesser auf, der zu einem Innendurchmesser des Halterungsrohres korrespondiert. Dadurch kann die Mikrolinse zur Justierung in dem Halterungsrohr verklemmt werden, bevor sie, beispielsweise durch eine Klebung, an dem Halterungsrohr weiter fixiert wird. Außerdem wird durch die Anpassung des Durchmessers der Mikrolinse an den Innendurchmesser des Halterungsrohres erreicht, dass durch das Halterungsrohr strömendes Licht über den gesamten Innendurchmesser des Halterungsrohres durch die Mikrolinse gebündelt werden kann.

Bei einer weiteren Ausgestaltung der erfindungsgemäßen Mikrolinsenanordnung ist die Mikrolinse an das Halterungsrohr geklebt. Durch eine Klebung der Mikrolinse an das Halterungsrohr wird eine flexibel realisierbare dauerhafte Verbindung der Mikrolinse in dem Halterungsrohr ermöglicht.

Bei einer weiteren Ausgestaltung der erfindungsgemäßen Mikrolinsenanordnung ist das Halterungsrohr aus Messing, Aluminium oder, beispielsweise mittels 3D-Druck, aus einem Kunststoff gefertigt. Die Fertigung des Halterungsrohres aus Messing oder Aluminium ermöglicht insbesondere eine einfache Verklebung oder (insbesondere im Fall der Verwendung von Messing) Verlötung der Mikrolinse mit dem Halterungsrohr. Die Fertigung des Halterungsrohres aus einem Kunststoff, insbesondere mittels 3D-Druck, ermöglicht vorteilhaft eine einfache und flexible Gestaltung des Halterungsrohres.

Bei einer weiteren Ausgestaltung der erfindungsgemäßen Mikrolinsenanordnung ist das Halterungsrohr als ein geschlitzter Hohlzylinder ausgebildet. Beispielsweise verläuft der Rohrschlitz parallel zu einer Zylinderachse des Halterungsrohres. Durch eine hohlzylindrische Ausbildung des Halterungsrohres weist das Halterungsrohr einen über seine gesamte Rohrlänge konstanten Innendurchmesser auf. Dadurch kann die Mikrolinse in gleicher Weise auf jeder Höhe des Halterungsrohres angeordnet werden und damit in jedem Abstand zu der Lichtquelle innerhalb des Halterungsrohres, so dass der Abstand zu der Lichtquelle den optischen Eigenschaften der Lichtquelle angepasst werden kann, um das von der Lichtquelle ausgegebene Licht optimal zu bündeln. Ein parallel zu einer Zylinderachse des Halterungsrohres verlaufender Rohrschlitz in dem Halterungsrohr ermöglicht vorteilhaft eine Positionierung, Justierung und Befestigung der Mikrolinse entlang der Zylinderachse des Halterungsrohres ohne eine Drehung der dazu verwendeten Instrumente um die Zylinderachse.

Die Linsenhalterung weist eine an einem Ende des Halterungsrohres angeordnete und die Linsenhalterung abschließende Bodenplatte auf, die eine Bodenplattenöffnung zu dem Rohrinneren des Halterungsrohres aufweist. Ferner kann die Bodenplatte einen Bodenplattenschlitz aufweisen, der sich von der Bodenplattenöffnung zu dem Rohrschlitz des Halterungsrohres erstreckt. Beispielsweise ist die Bodenplatte aus Messing, Aluminium oder mittels 3D-Druck aus einem Kunststoff gefertigt.

Die Ausgestaltung der Mikrolinsenanordnung mit der Bodenplatte vereinfacht die Befestigung der Mikrolinsenanordnung, beispielsweise durch Verkleben oder Verlöten der Bodenplatte aufgrund der größeren Oberfläche der Bodenplatte im Vergleich zu den Rändern des Halterungsrohres. Eine Bodenplattenöffnung in der Bodenplatte kann an die Ausmaße einer Lichtquelle angepasst werden, über der die Mikrolinsenanordnung angeordnet wird, und damit die Positionierung der Mikrolinsenanordnung bei deren Montage vorteilhaft erleichtern. Ein Bodenplattenschlitz in der Bodenplatte kann beispielsweise dazu dienen, die Mikrolinsenanordnung über einer Lichtquelle zu positionieren, die über eine elektrische Leitung mit elektrischer Energie versorgt wird, indem der Bodenplattenschlitz als Aussparung genutzt wird, durch die diese elektrische Leitung beim Positionieren der Mikrolinsenanordnung geführt wird. Die Fertigung der Bodenplatte aus Messing oder Aluminium ermöglicht insbesondere eine einfache Verklebung oder (insbesondere im Fall der Verwendung von Messing) Verlötung der Bodenplatte mit dem Halterungsrohr. Die Fertigung der Bodenplatte aus einem Kunststoff, insbesondere mittels 3D-Druck, ermöglicht vorteilhaft eine einfache und flexible Gestaltung der Bodenplatte.

Eine erfindungsgemäße mikrooptische Vorrichtung umfasst ein Tragelement, ein an dem Tragelement angeordnetes Die, eine auf dem Die angeordnete Leuchtdiode und eine erfindungsgemäße Mikrolinsenanordnung, wobei die Linsenhalterung der Mikrolinsenanordnung an dem Tragelement angeordnet ist und ein Endabschnitt des Halterungsrohres um das Die herum verläuft.

Eine erfindungsgemäße mikrooptische Vorrichtung ermöglicht ein vereinfachtes Justieren einer Mikrolinse über einer Leuchtdiode durch eine Anordnung der Mikrolinse in dem Halterungsrohr einer erfindungsgemäßen mikrooptischen Vorrichtung. Weitere Vorteile einer erfindungsgemäßen mikrooptischen Vorrichtung ergeben sich aus den oben genannten Vorteilen einer erfindungsgemäßen Mikrolinsenanordnung.

Eine Ausgestaltung der erfindungsgemäßen mikrooptischen Vorrichtung weist einen Bonddraht auf, der mit dem Die verbunden ist und durch den Rohrschlitz des Halterungsrohres geführt ist.

Die vorgenannte Ausgestaltung der erfindungsgemäßen mikrooptischen Vorrichtung berücksichtigt, dass ein Die mit einer Leuchtdiode häufig über einen Bonddraht elektrisch kontaktiert wird. Der Rohrschlitz in dem Halterungsrohr der Mikrolinsenanordnung wird dabei vorteilhaft zur Durchführung des Bonddrahtes genutzt.

Bei einer weiteren Ausgestaltung der erfindungsgemäßen mikrooptischen Vorrichtung ist die Bodenplattenöffnung zu dem Die korrespondierend und um das Die herum angeordnet.

Die vorgenannte Ausgestaltung der erfindungsgemäßen mikrooptischen Vorrichtung erleichtert vorteilhaft eine Positionierung der Mikrolinsenanordnung durch die Anordnung des Die in der Bodenplattenöffnung der Bodenplatte und vereinfacht dadurch gleichzeitig die Justierung der Mikrolinse über der Leuchtdiode.

Bei einer weiteren Ausgestaltung der erfindungsgemäßen mikrooptischen Vorrichtung ist die Linsenhalterung der Mikrolinsenanordnung an das Tragelement geklebt oder gelötet. Dadurch wird die Mikrolinsenanordnung in einfacher und kostengünstiger Weise an dem Tragelement fixiert.

Bei einem erfindungsgemäßen Verfahren zum Herstellen einer erfindungsgemäßen Mikrolinsenanordnung wird die Mikrolinse in dem Halterungsrohr verklemmt und anschließend durch den Rohrschlitz hindurch oder/und direkt an dem Rohrschlitz an das Halterungsrohr geklebt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung eines Ausführungsbeispiels einer mikrooptischen Vorrichtung, die nicht unter den Gegenstand der Ansprüche fällt,
- FIG 2: eine Draufsicht auf die in Figur 1 gezeigte mikrooptische Vorrichtung,
- FIG 3: eine perspektivische Darstellung der in Figur 1 gezeigten mikrooptischen Vorrichtung vor einer Montage der Mikrolinsenanordnung,
- FIG 4: eine Draufsicht auf ein Ausführungsbeispiel einer

Mikrolinsenanordnung, die nicht unter den Gegenstand der Ansprüche fällt,

FIG 5 eine nicht unter den Gegenstand der Ansprüche fallende Bodenplatte einer Mikrolinsenanordnung. Einander entsprechende Teile sind in den Figuren mit denselben Bezugszeichen versehen.

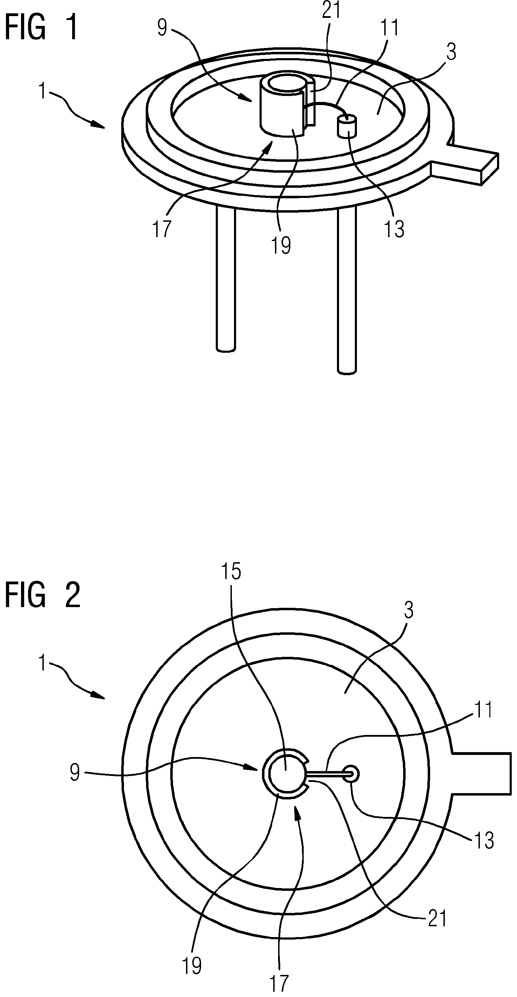

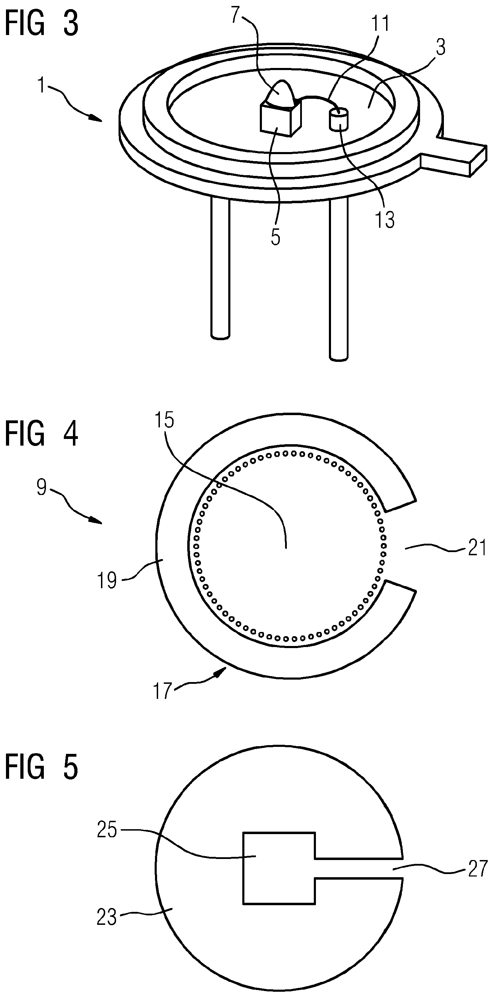

Figur 1 (FIG 1) und Figur 2 (FIG 2) zeigen ein Ausführungsbeispiel einer nicht erfindungsgemäßen mikrooptischen Vorrichtung 1. Dabei zeigt Figur 1 eine perspektivische Darstellung der mikrooptischen Vorrichtung 1 und Figur 2 zeigt eine Draufsicht auf die mikrooptische Vorrichtung 1. Die mikrooptische Vorrichtung 1 umfasst ein Tragelement 3, ein Die 5, eine Leuchtdiode 7 (siehe Figur 3) und ein Ausführungsbeispiel einer nicht erfindungsgemäßen Mikrolinsenanordnung 9.

Figur 3 (FIG 3) zeigt eine perspektivische Darstellung der mikrooptischen Vorrichtung 1 ohne die Mikrolinsenanordnung 9, das heißt vor einer Montage der Mikrolinsenanordnung 9. Das Die 5 ist an dem Tragelement 3 angeordnet. Die Leuchtdiode 7 ist auf dem Die 5 angeordnet. Das Die 5 ist über einen Bonddraht 11 mit einem an dem Tragelement 3 angeordneten elektrischen Kontaktanschluss 13 verbunden.

Figur 4 (FIG 4) zeigt eine Draufsicht auf die Mikrolinsenanordnung 9. Die Mikrolinsenanordnung 9 umfasst eine Mikrolinse 15 und eine Linsenhalterung 17 für die Mikrolinse 15. Die Linsenhalterung 17 weist ein Halterungsrohr 19 auf. Das Halterungsrohr 19 ist als ein geschlitzter Hohlzylinder mit einem Rohrschlitz 21 ausgebildet, der parallel zu einer Zylinderachse des Halterungsrohres 19 über eine gesamte Rohrlänge des Halterungsrohres 19 verläuft. Beispielsweise ist das Halterungsrohr 19 aus Messing, Aluminium oder mittels 3D-Druck aus einem Kunststoff gefertigt.

Die Mikrolinse 15 ist innerhalb des Halterungsrohres 19 angeordnet und weist einen Durchmesser auf, der zu einem Innendurchmesser des Halterungsrohres 19 korrespondiert. Beispielsweise ist die Mikrolinse 15 an das Halterungsrohr 19 geklebt.

Die Linsenhalterung 17 der Mikrolinsenanordnung 9 ist an dem Tragelement 3 angeordnet, wobei ein Endabschnitt des Halterungsrohres 19 um das Die 5 herum verläuft. Beispielsweise ist die Linsenhalterung 17 an das Tragelement 3 geklebt oder gelötet. Der Bonddraht 11 ist durch den Rohrschlitz 21 des Halterungsrohres 19 geführt.

Figur 5 (FIG 5) zeigt eine nicht unter den Gegenstand der Ansprüche fallende Bodenplatte 23 der Linsenhalterung 17 der Mikrolinsenanordnung 9. Die Bodenplatte 23 ist an einem tragelementseitigen Ende des Halterungsrohres 19 angeordnet und schließt die Linsenhalterung 17 tragelementseitig ab. Die Bodenplatte 23 weist eine Bodenplattenöffnung 25 zu dem Rohrinneren des Halterungsrohres 19 auf. Die Bodenplattenöffnung 25 korrespondiert zu dem Die 5 und ist um das Die 5 herum angeordnet. Ferner weist die Bodenplatte 23 einen Bodenplattenschlitz 27 auf, der sich von der Bodenplattenöffnung 25 zu dem Rohrschlitz 21 des Halterungsrohres 19 erstreckt. Beispielsweise ist die Bodenplatte 23 aus Messing, Aluminium oder mittels 3D-Druck aus einem Kunststoff gefertigt.

Beim Herstellen der Mikrolinsenanordnung 9 wird die Mikrolinse 15 in dem Halterungsrohr 19 in einem Abstand verklemmt, der den optischen Eigenschaften der verwendeten Leuchtdiode 7 angepasst ist, um das von der Leuchtdiode 7 ausgegebene Licht optimal zu bündeln. Anschließend wird die Mikrolinse 15 durch den Rohrschlitz 21 hindurch oder/und direkt an dem Rohrschlitz 21 an das Halterungsrohr 19 geklebt. Bei einer Produktion gleichartiger Mikrolinsenanordnungen 9 für Leuchtdioden 7 gleicher optischer Eigenschaften können die Mikrolinsen 15 in einem Vorproduktionsschritt jeweils in einem vorgegebenen, den optischen Eigenschaften der Leuchtdioden 7 angepassten Abstand von der Leuchtdiode 7 in dem Halterungsrohr 19 fixiert werden. Da die Mikrolinsenanordnung 9 erfindungsgemäß eine Bodenplatte 23 aufweist, wird ferner die Bodenplatte 23 an das Halterungsrohr 19 geklebt oder gelötet.

Beim Herstellen der mikrooptischen Vorrichtung 1 wird das tragelementseitige Ende der Linsenhalterung 17 um das Die 5 herum auf das Tragelement 3 geklebt oder gelötet. Wenn die Mikrolinsenanordnung 9 nicht erfindungsgemäß keine Bodenplatte 23 aufweist, wird das tragelementseitige Ende des Halterungsrohres 19 um das Die 5 herum auf das Tragelement 3 geklebt oder gelötet. Da die Mikrolinsenanordnung 9 erfindungsgemäß eine Bodenplatte 23 aufweist, wird die Bodenplatte 23 auf das Tragelement 3 geklebt oder gelötet, wobei beim Positionieren der Mikrolinsenanordnung 9 an dem Tragelement 3 das Die 5 durch die Bodenplattenöffnung 25 der Bodenplatte 23 und der Bonddraht 11 durch den Bodenplattenschlitz 27 der Bodenplatte 23 geführt werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden.

## Patentansprüche

1. Mikrolinsenanordnung (9), umfassend
- eine Mikrolinse (15) und
- eine Linsenhalterung (17) für die Mikrolinse (15),
- wobei die Linsenhalterung (17) ein Halterungsrohr (19) aufweist, das einen Rohrschlitz (21) aufweist, und
- die Mikrolinse (15) innerhalb des Halterungsrohres (19) angeordnet ist, **dadurch gekennzeichnet, dass**
die Linsenhalterung (17) eine an einem Ende des Halterungsrohres (19) angeordnete und die
Linsenhalterung (17) abschließende Bodenplatte (23) aufweist, die eine Bodenplattenöffnung (25) zu einem Rohrinneren des Halterungsrohres (19) aufweist.

2. Mikrolinsenanordnung (9) nach Anspruch 1, wobei der Rohrschlitz (21) über eine gesamte Rohrlänge des Halterungsrohres (19) verläuft.

3. Mikrolinsenanordnung (9) nach Anspruch 1 oder 2, wobei die Mikrolinse (15) einen Durchmesser aufweist, der zu einem Innendurchmesser des Halterungsrohres (19) korrespondiert.

4. Mikrolinsenanordnung (9) nach einem der vorhergehenden Ansprüche, wobei die Mikrolinse (15) an das Halterungsrohr (19) geklebt ist.

5. Mikrolinsenanordnung (9) nach einem der vorhergehenden Ansprüche, wobei das Halterungsrohr (19) aus Messing, Aluminium oder, beispielsweise mittels 3D-Druck, aus einem Kunststoff gefertigt ist.

6. Mikrolinsenanordnung (9) nach einem der vorhergehenden Ansprüche, wobei das Halterungsrohr (19) als ein geschlitzter Hohlzylinder ausgebildet ist.

7. Mikrolinsenanordnung (9) nach Anspruch 6, wobei der Rohrschlitz (21) parallel zu einer Zylinderachse des Halterungsrohres (19) verläuft.

8. Mikrolinsenanordnung (9) nach einem der vorhergehenden Ansprüche, wobei die Bodenplatte (23) einen Bodenplattenschlitz (27) aufweist, der sich von der Bodenplattenöffnung (25) zu dem Rohrschlitz (21) des Halterungsrohres (19) erstreckt.

9. Mikrolinsenanordnung (9) nach einem der vorhergehenden Ansprüche, wobei die Bodenplatte (23) aus Messing, Aluminium oder, beispielsweise mittels 3D-Druck, aus einem Kunststoff gefertigt ist.

10. Mikrooptische Vorrichtung (1), umfassend
- ein Tragelement (3),
- ein an dem Tragelement (3) angeordnetes Die (5),
- eine auf dem Die (5) angeordnete Leuchtdiode (7) und
- eine gemäß einem der vorhergehenden Ansprüche ausgebildete Mikrolinsenanordnung (9), wobei
- die Linsenhalterung (17) der Mikrolinsenanordnung (9) an dem Tragelement (3) angeordnet ist und ein Endabschnitt des Halterungsrohres (19) um das Die (5) herum verläuft.

11. Mikrooptische Vorrichtung (1) nach Anspruch 10 mit einem Bonddraht (11), der mit dem Die (5) verbunden ist und durch den Rohrschlitz (21) des Halterungsrohres (19) geführt ist.

12. Mikrooptische Vorrichtung (1) nach Anspruch 10 oder 11, wobei die Bodenplattenöffnung (25) der Bodenplatte (23) zu dem Die (5) korrespondiert und um das Die (5) herum angeordnet ist.

13. Mikrooptische Vorrichtung (1) nach einem der Ansprüche 10 bis 12, wobei die Linsenhalterung (17) der Mikrolinsenanordnung (9) an das Tragelement (3) geklebt oder gelötet ist.

14. Verfahren zum Herstellen einer gemäß einem der Ansprüche 1 bis 9 ausgebildeten Mikrolinsenanordnung (9), wobei die Mikrolinse (15) in dem Halterungsrohr (19) verklemmt und anschließend durch den Rohrschlitz (21) hindurch oder/und direkt an dem Rohrschlitz (21) an das Halterungsrohr (19) geklebt wird.

## Claims

1. A microlens arrangement (9), comprising
- a microlens (15) and
- a lens holder (17) for the microlens (15),
- wherein the lens holder (17) has a holding tube (19) which has a tube slot (21), and
- the microlens (15) is arranged inside the holding tube (19), **characterized in that**, the lens holder (17) has a base plate (23) which is arranged on one end of the holding tube (19), closes the lens holder (17) and has a base plate opening (25) toward the tube interior of the holding tube (19).

2. The microlens arrangement (9) as claimed in claim 1, wherein the tube slot (21) runs over the entire tube length of the holding tube (19).

3. The microlens arrangement (9) as claimed in claim 1 or 2, wherein the microlens (15) has a diameter which corresponds to an inner diameter of the holding tube (19).

4. The microlens arrangement (9) as claimed in one of the preceding claims, wherein the microlens (15) is adhesively bonded to the holding tube (19).

5. The microlens arrangement (9) as claimed in one of the preceding claims, wherein the holding tube (19) is made from brass, aluminum or, for example by means of 3D printing, a plastic.

6. The microlens arrangement (9) as claimed in one of the preceding claims, wherein the holding tube (19) is configured as a slotted hollow cylinder.

7. The microlens arrangement (9) as claimed in claim 6, wherein the tube slot (21) runs parallel with respect to a cylinder axis of the holding tube (19).

8. The microlens arrangement (9) according to one of the preceding claims, wherein the base plate (23) has a base plate slot (27) which extends from the base plate opening (25) to the tube slot (21) of the holding tube (19).

9. The microlens arrangement (9) according to one of the preceding claims, wherein the base plate (23) is made from brass, aluminum or, for example by means of 3D printing, a plastic.

10. A micro-optical device (1), comprising
- a carrier element (3),
- a die (5) arranged on the carrier element (3),
- a light-emitting diode (7) arranged on the die (5), and
- a microlens arrangement (9) configured as claimed in one of
the preceding claims, wherein
- the lens holder (17) of the microlens arrangement (9) is arranged on the carrier element (3) and an end section of the holding tube (19) runs around the die (5).

11. The micro-optical device (1) as claimed in claim 10, having a bonding wire (11) which is connected to the die (5) and is guided through the tube slot (21) of the holding tube (19).

12. The micro-optical device (1) as claimed in claim 10 or 11, wherein the base plate opening (25) of the base plate (23) corresponds to the die (5) and is arranged around the die (5).

13. The micro-optical device (1) as claimed in one of claims 10 to 12, wherein the lens holder (17) of the microlens arrangement (9) is adhesively bonded or soldered to the carrier element (3).

14. A method for producing a microlens arrangement (9) configured as claimed in one of claims 1 to 9, wherein the microlens (15) is clamped in the holding tube (19) and subsequently adhesively bonded to the holding tube (19) through the tube slot (21) and/or directly on the tube slot (21) .

## Revendications

1. Agencement de microlentille (9) comprenant
- une microlentille (15) et
- un support de lentille (17) pour la microlentille (15),
- le support de lentille (17) comprenant un tube de support (19) qui présente une fente (21) de tube, et
- la microlentille (15) est agencée à l'intérieur du tube de support (19), **caractérisé en ce que** le support de lentille (17) présente une plaque de base (23) agencée à une extrémité du tube de support (19) et fermant le support de lentille (17), qui présente une ouverture (25) de plaque de base vers l'intérieur du tube de support (19).

2. Agencement de microlentille (9) selon la revendication 1, dans lequel la fente (21) de tube s'étend sur toute la longueur du tube de support (19).

3. Agencement de microlentille (9) selon la revendication 1 ou la revendication 2, dans lequel la microlentille (15) présente un diamètre qui correspond à un diamètre intérieur du tube de support (19).

4. Agencement de microlentille (9) selon l'une des revendications précédentes, dans lequel la microlentille (15) est collée au tube de support (19).

5. Agencement de microlentille (9) selon l'une des revendications précédentes, dans lequel le tube de support (19) est fabriqué en laiton, en aluminium ou, par exemple au moyen d'une impression 3D, en une matière plastique.

6. Agencement de microlentille (9) selon l'une des revendications précédentes, dans lequel le tube de support (19) est réalisé sous la forme d'un cylindre creux fendu.

7. Agencement de microlentille (9) selon la revendication 6, dans lequel la fente (21) de tube s'étend parallèlement à un axe cylindrique du tube de support (19).

8. Agencement de microlentille (9) selon l'une des revendications précédentes, dans lequel la plaque de base (23) présentant une fente (27) de plaque de base qui s'étend depuis l'ouverture (25) de plaque de base jusqu'à la fente (21) de tube du tube de support (19).

9. Agencement de microlentille (9) selon l'une des revendications précédentes, dans lequel la plaque de base (23) est fabriquée en laiton, en aluminium ou, par exemple au moyen d'une impression 3D, en une matière plastique.

10. Dispositif micro-optique (1) comprenant
- un élément de support (3),
- une puce (5) agencée sur l'élément de support (3),
- une diode électroluminescente (7) agencée sur la puce (5), et
- un agencement de microlentille (9) formé selon l'une des revendications précédentes, dans lequel
- le support de lentille (17) de l'agencement de microlentille (9) est agencé sur l'élément de support (3) et une partie d'extrémité (19) du tube de support s'étend autour de la puce (5).

11. Dispositif micro-optique {1) selon la revendication 10, comprenant un fil de liaison (11) qui est relié à la puce (5) et qui est guidé à travers la fente (21) de tube du tube de support (19).

12. Dispositif micro-optique (1) selon la revendication 10 ou la revendication 11, dans lequel l'ouverture (25) de la plaque de base (23) correspond à la puce (5) et est agencée autour de la puce (5).

13. Dispositif micro-optique (1) selon l'une des revendications 10 à 12, dans lequel le support de lentille (17) de l'agencement de microlentille (9) est collé ou soudé à l'élément de support (3).

14. Procédé de fabrication d'un agencement de microlentille (9) selon l'une des revendications 1 à 9, dans lequel la microlentille (15) est bloquée dans le tube de support (19) puis collée au tube de support (19) à travers la fente (21) de tube et/ou directement sur la fente (21) de tube.
